# EUROPÄISCHE PATENTSCHRIFT

(11) **EP 0 421 316 B1**
(45) Veröffentlichungstag und Bekanntmachung des Hinweises auf die Patenterteilung: **22.09.1993**
(21) Anmeldenummer: 90118788.0
(22) Anmeldetag: 01.10.1990
(51) Int. Cl.: B60J 10/04

(54) **Verriegelbares Abdicht- und Füllerprofil, insbesondere für Fenster von Kraftfahrzeugen**
Lockable sealing and filling joint, especially for vehicle windows
Joint d'étanchéité et de remplissage verrouillable, en particulier pour fenêtre de véhicule automobile

(30) Priorität: 05.10.1989 DE 3933250
(43) Veröffentlichungstag der Anmeldung: 10.04.1991
(73) Patentinhaber: Continental Aktiengesellschaft, 30165 Hannover (DE)
(72) Erfinder: Bethge, Michael, D-3000 Hannover 71 (DE)

(56) Entgegenhaltungen:
- EP-A- 0 282 919
- FR-A- 2 393 212
- FR-A- 2 517 011
- FR-A- 2 551 826

## Beschreibung

Die Erfindung betrifft ein Abdicht- und Füllerprofil zur Abdichtung einer Fensterführung, insbesondere für Kraftfahrzeuge, gemäß dem Oberbegriff des Patentanspruchs 1.

Ein derartiges Profil ist beispielsweise aus dem Dokument EP-A-0 282 919 bekannt. Es dient dazu, Fensterscheiben in Kraftfahrzeugkarosserien zu halten und zu führen. Die Karosserien sind dazu mit insbesondere U-förmigen Aufnahmekanälen versehen, die Hinterschneidungen aufweisen, in die die Haltelippen der Profilflanken eingreifen können. Bei Fenstern, die geöffnet werden sollen und dazu auf- und abbewegbar sein müssen, hat es sich gezeigt, daß derartige Profile sich aus ihren Halterungen lösen können, wenn ihre Breite nicht genau auf die Breite der Aufnahmekanäle abgestimmt ist und die Haltekraft der Haltelippen bzw. eingelagerter Metallarmierungen nicht ausreicht.

Aufgabe der vorliegenden Erfindung ist es, ein Profil der eingangs beschriebenen Art zu schaffen, das leicht zu montieren ist und das nach Erreichen seiner Einbaulage mit einfachen Mitteln stabil verriegelt werden kann.

Gelöst wird diese Aufgabe durch ein gattungsgemäßes Profil, das die im kennzeichnenden Teil des Patentanspruchs 1 angegebenen Merkmale aufweist. Wesentlich ist, daß der Profilsteg nicht nur an seinen beiden einander gegenüberliegenden Enden über äußere Sollknickstellen mit den Profilflanken verbunden ist, sondern daß ihm außerdem mittig eine etwa parallel zu den Profilflanken verlaufende Stempelleiste zugeordnet und an inneren Sollknickstellen einstückig angeformt ist, wobei der Profilsteg an den inneren Sollknickstellen hälftig knickbar und gegen die Stempelleiste schwenkbar ist. Dabei ist entscheidend, daß der Profilsteg länger als die in Einbaulage zur Verfügung stehende Arretierungsbreite ist.

Durch diese Maßnahmen wird ein Profil geschaffen, das zur Montage auf sehr geringe Breite zusammengefaltet werden kann. Nach Erreichen der Einbaulage wird der Profilsteg entweder mit einem Werkzeug oder durch die eingesetzte Fensterscheibe über die Stempelleiste an den Sollknickstellen durchgeknickt und in eine stabile Arretierungsstellung gebracht. Die Profilsteghälften spreizen dabei die Haltelippen fest in die Hinterschnitte des Aufnahmekanals. Die Stempelleiste befindet sich dadurch zusammen mit dem Profilsteg in einer stabilen Lage, und das Profil kann nur durch Zurückknicken des Profilstegs, das heißt, durch Herausziehen der Stempelleiste gelöst werden. Durch die montagebedingten Abmessungen ist dies jedoch nur mit erheblichem Kraftaufwand und mit der Gefahr der Zerstörung des Profils möglich. Das Profil sitzt dadurch fest in seiner Einbaulage.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- Fig. 1: den Schnitt durch ein abdichprofil im Fertigungszustand, mit nach außen geklappten Profilflanken und mittigem Arretierungsstempel;
- Fig. 2: ein Abdichtprofil nach der Fig. 1, in zusammengefalteter Montagestellung zum Einbau in einen U-förmigen Aufnahmekanal;
- Fig. 3: ein Abdichtprofil nach der Fig. 1, in Montagestellung unmittelbar vor der Verriegelung;
- Fig. 4: ein Abdichtprofil nach der Fig. 1, in durch Durchknicken des Arretierungsstempels verriegelter Endstellung;
- Fig. 5: ein Abdichtprofil nach der Fig. 1, in Einbaulage für ein durchgängig auf- und abbewegbares Fenster.

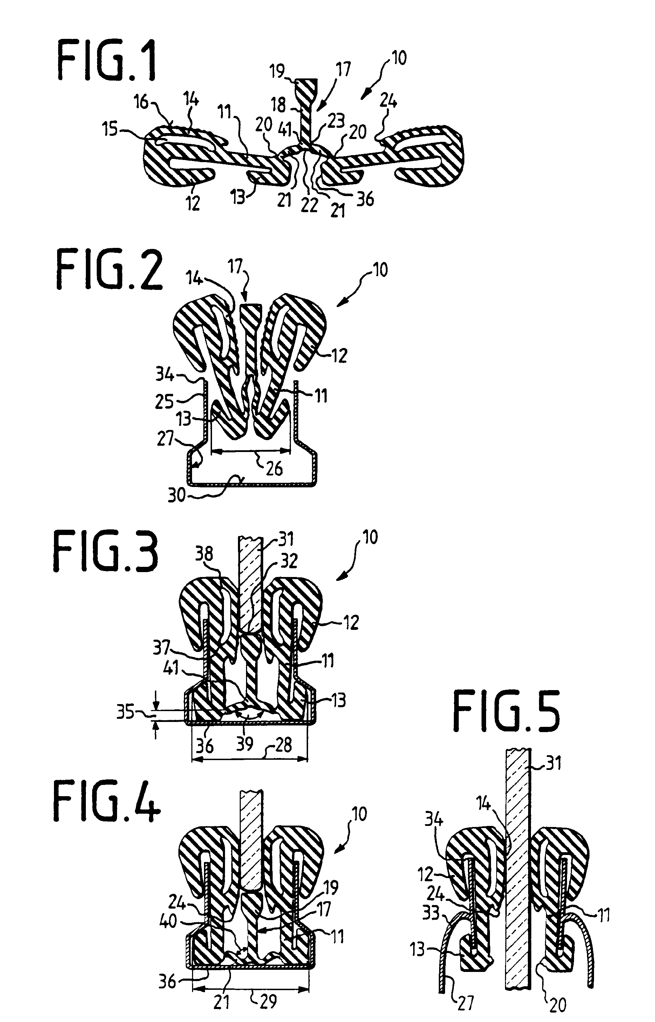

Das in der Fig. 1 dargestellte Abdichtprofil 10 besteht aus einem Elastomer und weist zwei einander gegenüberliegend nach außen weisende Profilflanken 11 auf. Die Profilflanken 11 sind über einen Profilsteg 21 miteinander verbunden. Der Profilsteg 21 ist über äußere Sollknickstellen 20 einstükkig mit den Profilflanken 11 verbunden.

An die Profilflanken 11 sind an den den äußeren Sollknickstellen 20 abgewandten Enden obere Haltelippen 12 und im Bereich der äußeren Sollknickstellen 20 untere Haltelippen 13 einstückig angeformt. Die Haltelippen 12 und 13 sind an der dem Profilsteg 21 gegenüberliegenden Außenseite mit aufeinander zuweisenden freien Enden einstückig an die Profilflanken 11 angeformt.

Den oberen Haltelippen 12 gegenüberliegend sind Dichtlippen 14 ebenfalls einstückig an die Profilflanken 11 angeformt. Die Dichtlippen 14 weisen geschlossene Luftkammern 15 auf, die sich etwa bis zur Hälfte der Länge der Profilflanken 11 erstrecken. Die sich längs erstreckenden Luftkammern 15 sind mit oberen Luftkammerendpunkten 38 versehen, die von den Dichtlippen 14 weg nach außen, das heißt, auf die Haltelippen 12 zu weisen und sich bis in die Profilflanken 11 hinein erstrecken. Dadurch entstehen im Bereich der Luftkammerendpunkte 38 etwa mittig der Länge der Profilflanken 11 innere Knickstellen 37, in denen die einstückig angeformten Dichtlippen 14 gut einfedern können.

An ihrem dem Profilsteg 21 zuweisenden Ende sind die Dichtlippen 14 mit Haltenasen 24 versehen. An ihren von den Profilflanken 11 wegweisenden Oberflächen können auf den Dichtlippen 14 Gleibeschichtungen 16 aufgebracht sein.

An dem Profilsteg 21 ist mittig einseitig eine Stempelleiste 17 einstückig angeformt. Die Stempelleiste 17 besteht aus einem längsverlaufenden Stempelsteg 18 und einem am freien Ende des Stempelstegs 18 angeformten Stempelkopf 19. In Einbaulage, wie er beispielsweise in den Fig. 2 und 3 dargestellt ist, verläuft die Stempelleiste 17 etwa parallel zu den Profilflanken 11, wobei der Stempelkopf 19 bis in den Bereich der Dichtlippen 14 reicht.

In dem in der Fig. 1 dargestellten Fertigungszustand weist der Profilsteg 21 unterhalb des Stempelstegs 18 eine Auskehlung 22 auf, die Teil von beiderseits des Stempelfußes 41 der Stempelleiste 17 vorgesehenen, inneren Sollknickstellen 23 ist. Der Profilsteg 21 ist in der Auskehlung 22 mit einem nach außen weisenden Spreizwinkel 39 versehen. Der Spreizwinkel 39 ist als ein stumpfer Winkel von etwa 130 bis 160 Grad ausgebildet, der die Auskehlung 22 einschließt.

Wie die Fig. 2 zeigt, kann das Abdichtprofil 10 zur Montage in einen U-förmigen Aufnahmekanal 25 auf eine Montagebreite 26 zusammengefaltet werden, die kleiner als die lichte Weite des Aufnahmekanals 25 ist. Dazu werden die Profilflanken 11 gegen die Stempelleiste 17 und die Hälften des Profilstegs 21 in der Auskehlung 22 gegeneinander gefaltet. Durch die in ihrer Materialstärke verringerten inneren Sollknickstellen 23 und die ebenfalls in ihrer Materialstärke verringerten äußeren Sollknickstellen 20 kann die Stempelleiste 17 dabei bis weit in den Bereich der Dichtlippen 14 gezogen werden, bis der Stempelkopf 19 fast am oberen Ende der Dichlippen 14 liegt.

Nach Einführen des Abdichtprofils 10 in den Aufnahmekanal 25 greifen die unteren Haltelippen 13 in beiderseits vorgesehene Hinterschnitte 27, die, wie die Fig. 3 zeigt, etwa der Spreizbreite 28 des Profilstegs 21 entsprechen. Nach Erreichen der in der Fig. 3 dargestellten Montageposition wird ein Druck auf den Stempel 17 ausgeübt und der Spreizwinkel 39 des Profilstegs 21 durchgeknickt, bis die Auskehlung 22 auf der Basis 30 des Aufnahmekanals 25 aufsetzt. Dazu sind die äußeren Sollknickstellen 20 in einem vorbestimmten Abstand 35 von dem freien Ende 36 der Profillippen 11 entfernt angeformt.

Durch die Materialverringerung an den Sollknickstellen 20 und 23 knickt der Profilsteg 21 aus seinem Spreizwinkel 39 in einen Verriegelungswinkel 40 um und preßt die unteren Haltelippen 13 in der Arretierbreite 29 fest in die Hinterschnitte 27 des Aufnahmekanals 25. Die Verriegelungswinkel 40 entstehen dabei beiderseits der Stempelleiste 17 und sind spitze Winkel von etwa 50 bis 80 Grad. Durch die unterschiedlichen Winkel 39 und 40 ist die Arretierungsbreite 29 des Profilstegs 21 dabei etwas größer als seine zuvor eingenommene Spreizbreite.

Wie die Fig. 4 zeigt, reicht der Stempelkopf 19 nach der Arretierung bis in den Bereich der Haltenasen 24 der Dichtlippen 14, gleichzeitig übergreifen die oberen Haltelippen 12 die Außenränder 34 eines Rahmenprofils 25. Da die beiden Hälften des gestreckten Profilstegs 21 länger als die Montagebreite 26 des Rahmenprofils 25 sind, werden die Profilflanken 11 fest in Hinterschnitte 27 gepreßt und dort mit den unteren Haltelippen 13 in stabiler Lage gehalten.

Bei der in der Fig. 5 dargestellten Ausführungsform wird ein durchlaufendes Fenster 31 von den Dichtlippen 14 abgedichtet. Dazu wird nach der Montage des Abdichtprofils 10 an Karosseriekanten 33 das Fenster 31 mit seiner Fensterunterkante 32 so weit gegen die Stempelleiste 17 gefahren, bis der Profilsteg 21 in den Sollknickstellen 20 und 23 durchknickt und die unteren Haltelippen 13 fest in Hinterschnitte 27 der Karosseriekanten 33 gepreßt sind. Mit einem geeigneten Werkzeug werden die äußeren Sollknickstellen 20 durchtrennt und die Stempelleiste 17 entfernt. Die unteren Haltelippen 13 können sich dabei hinter entsprechend vorgesehenen Karosseriekante 33 verhaken.

## Patentansprüche

1. Profil zur Abdichtung einer Fensterführung, insbesondere für Kraftfahrzeuge, mit zwei im Querschnitt einander gegenüberliegenden Profilflanken (11), die an einem Ende mit Dichtlippen (14) zur Abdichtung und Führung des geführten Fensters und mit Haltelippen (12) zur Befestigung und Halterung in einem an vorbestimmten Karosserieteilen und dergleichen vorgesehenen U-förmigen Aufnahmekanal (25) versehen sind und an ihrem anderen, den Dichtlippen (14) abgewandten Ende nach außen weisende Haltelippen (13) aufweisen und die über äußere Sollknickstellen (20) durch einen Profilsteg (21) miteinander verbunden und zur Montage im Bereich des Profilstegs (21) auf eine Montagebreite (26) zusammenfaltbar sind, die kleiner ist als die lichte Weite des Aufnahmekanals (25), **dadurch gekennzeichnet,** daß dem Profilsteg (21) mittig eine etwa parallel zu den Profilflanken (11) verlaufende Stempelleiste (17) zugeordnet und an inneren Sollknickstellen (23) einstückig angeformt ist und der Profilsteg (21) an den inneren Sollknickstellen (23) hälftig knickbar und gegen die Stempelleiste (17) schwenkbar ist, wobei der Profilsteg (21) länger als die in Einbaulage zur Verfügung stehende Arretierungsbreite (29) und nach Erreichen der Einbaulage so in Montagerichtung durchknickbar ist, daß er eine stabile Arretierungsstellung einnimmt.

2. Profil nach Anspruch 1, dadurch gekennzeichnet, daß die Dichtlippen (14) mit Luftkammern (15) und einer Gleitbeschichtung (16) versehen sind.

3. Profil nach Anspruch 1 oder 2, dadurch gekennzeichnet, daß die äußeren Sollknickstellen (20) in einem vorbestimmten Abstand (35) von dem freien unteren Ende (36) entfernt einstückig an die Profilflanken (11) angeformt und der Profilsteg (21) an den inneren Sollknickstellen (23) und den äußeren Sollknickstellen (20) in eine stabile Lage durchknickbar ist.

4. Profil nach einem der Ansprüche 1 bis 3, dadurch gekennzeichnet, daß der Profilsteg (21) an seiner Unterseite mit einer einen Teil der inneren Sollknickstellen (23) bildenden Auskehlung (22) versehen ist und zu den äußeren Sollknickstellen (20) hin einen definierten Spreizwinkel (39) aufweist, der unter Überwindung des Abstandes (35) in beiderseits des Stempelstegs (18) entstehende stabile Verriegelungswinkel (40) durchknickbar ist.

## Claims

1. Profile for sealing a window frame, more especially for motor vehicles, having two profile walls (11), which lie opposite each other when viewed in cross-section and are provided, at one end, with sealing lips (14) for sealing and framing the framed window and with retaining lips (12) for securing and retaining such in a U-shaped receiving channel (25), which is provided in predetermined body parts and the like, and have, at their other end remote from the sealing lips (14), outwardly pointing retaining lips (13), and said profile walls are interconnected by a profile web (21) via external desired bend points (20) and are foldable together along an assembly width (26) for assembly in the region of the profile web (21), such width being smaller than the inside width of the receiving channel (25), characterised in that the profile web (21) has a stamp bar (17) associated centrally therewith, which bar extends substantially parallel to the profile walls (11) and is formed to fit integrally at desired internal bend points (23), and the profile web (21) is half-bendable at the desired internal bend points (23) and is pivotable towards the stamp bar (17), the profile web (21) being longer than the locking width (29) available in the installation position and being bendable, after the installation position has been reached, into the assembly direction so that it assumes a stable locking position.

2. Profile according to claim 1, characterised in that the sealing lips (14) are provided with air chambers (15) and a sliding coating (16).

3. Profile according to claim 1 or 2, characterised in that the desired external bend points (20) are integrally formed on the profile walls (11) at a predetermined spacing (35) remote from the free lower end (36), and the profile web (21) is bendable into a stable position at the desired internal bend points (23) and at the desired external bend points (20).

4. Profile according to one of claims 1 to 3, characterised in that the profile web (21) is provided, on its underside, with a hollowed-out portion (22), which forms part of the desired internal bend points (23), and has a specific expansion angle (39) towards the desired external bend points (20), which angle is bendable into stable locking angles (40) which are formed on both sides of the stamp web (18), so as to overcome the spacing (35).

## Revendications

1. Profilé d'étanchéité d'un guide de fenêtre, en particulier de véhicules automobiles, comprenant deux flancs (11) qui sont opposés l'un à l'autre en coupe transversale, qui sont équipés à une extrémité de languettes (14) d'étanchéité et de guidage de la fenêtre guidée et de languettes de retenue (12) de fixation et de retenue dans un canal de logement (25) en étrier prévu sur des parties prédéterminées de carrosserie et analogues et qui comportent à l'autre extrémité tournée à l'opposé des languettes d'étanchéité (14) des languettes de retenue (13) orientées vers l'extérieur, les flancs (11) du profilé étant reliés l'un à l'autre par une âme (21) en des points extérieurs de flexion de consigne (20) et étant repliables l'un contre l'autre, pour le montage, dans la région de l'âme (21) à une largeur (26) qui est inférieure à la largeur de l'ouverture du canal de logement (25), caractérisé en ce qu'une nervure de poussée (17) à peu près parallèle aux flancs (11) du profilé est disposée au milieu de l'âme (21) avec laquelle elle est venue de moulage en une pièce en des points intérieurs de flexion de consigne (23) et l'âme (21) du profilé peut se replier en deux aux points intérieurs de flexion de consigne (23) et se rabattre contre la nervure de poussée (17), l'âme (21) du profilé étant plus longue que la largeur de blocage (29) disponible à la position de montage et pouvant s'infléchir en direction de montage après avoir atteint la position d'assemblage de manière qu'elle occupe une position stable de blocage.

2. Profilé selon la revendication 1, caractérisé en ce que les languettes d'étanchéité (14) comportent des chambres à air (15) ainsi qu'un revêtement anti-friction (16).

3. Profilé selon la revendication 1 ou 2, caractérisé en ce que les points extérieurs de flexion de consigne (20) sont venus de moulage en une pièce avec les flancs (11) du profilé à une distance prédéterminée (35) de l'extrémité inférieure libre (36) de ceux-ci et l'âme (21) du profilè peut s'infléchir aux points intérieurs de flexion de consigne (23) et aux points extérieurs de flexion de consigne (20) pour être mise à une position stable.

4. Profilé selon l'une des revendications 1 à 3, caractérisé en ce que l'âme (21) du profilé comporte sur le côté inférieur une gorge (22) formant partie des points intérieurs de flexion de consigne (23) et présente un angle défini (39) d'écartement, vers les points extérieurs de flexion de consigne (20), qui peut subir une inflexion après avoir parcouru la distance (35) de manière à former des angles stables déverrouillage (40) de part et d'autre de la baguette (18) de la nervure de poussée.
